(19) Europäisches Patentamt / European Patent Office / Office européen des brevets

(11) **EP 3 506 327 A1**

(12) **EUROPEAN PATENT APPLICATION**
published in accordance with Art. 153(4) EPC

(43) Date of publication:
**03.07.2019 Bulletin 2019/27**

(51) Int Cl.:
**H01G 9/20** (2006.01)

(21) Application number: **17843663.0**

(22) Date of filing: **23.08.2017**

(86) International application number:
**PCT/JP2017/030212**

(87) International publication number:
**WO 2018/038185 (01.03.2018 Gazette 2018/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.08.2016 JP 2016165514**

(71) Applicant: **Fujikura Ltd.**
**Tokyo 135-8512 (JP)**

(72) Inventor: **NAKA, Keisuke**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(54) **PHOTOELECTRIC CONVERSION ELEMENT**

(57)  Disclosed is a photoelectric conversion element which includes at least one photoelectric conversion cell. The photoelectric conversion cell includes an electrode substrate, a counter substrate facing the electrode substrate, a ring-shaped sealing portion bonding the electrode substrate and the counter substrate and an electrolyte arranged inside the sealing portion. The sealing portion includes a ring-shaped first resin sealing portion which is adhered to the electrode substrate and contains a thermoplastic resin and a ring-shaped second resin sealing portion which is provided so as to sandwich the counter substrate together with the first resin sealing portion and contains a thermoplastic resin. The second resin sealing portion has a melting point higher than that of the first resin sealing portion. The first resin sealing portion includes a first main body part adhered to the electrode substrate and a first protrusion part provided on a side of the first main body part facing the direction opposite to the electrode substrate. The first main body part has an insertion part inserted between the electrode substrate and the counter substrate and a non-insertion part which is not inserted between the electrode substrate and the counter substrate. The first protrusion part is provided in the non-insertion part of the first main body part. The second resin sealing portion includes a second main body part which is provided on a side of the counter substrate facing the direction opposite to the electrode substrate and the second main body part of the second resin sealing portion is adhered to the first protrusion part.

Fig.1

EP 3 506 327 A1

**Description**

TECHNICAL FIELD

The present invention relates to a photoelectric conversion element.

BACKGROUND ART

As a photoelectric conversion element, a photoelectric conversion element using dyes attracts attention since it is inexpensive and can obtain high photoelectric conversion efficiency, and various developments on photoelectric conversion elements using dyes are performed.

As the photoelectric conversion element using dyes, for example, a photoelectric conversion element described in the following patent document 1 is known. In the following patent document 1, disclosed is a photoelectric conversion element in which at least one photoelectric conversion cell includes: an electrode substrate; a counter substrate facing the electrode substrate; and a ring-shaped sealing portion bonding the electrode substrate and the counter substrate, and an electrolyte disposed inside the sealing portion. The following patent document 1 also discloses that the sealing portion includes a ring-shaped first resin sealing portion adhered to the electrode substrate, and a ring-shaped second resin sealing portion provided so as to sandwich the counter substrate together with the first resin sealing portion, and that the second resin sealing portion has a melting point higher than that of the first resin sealing portion. In this way, durability of the photoelectric conversion element is improved by providing a soft resin sealing portion between the electrode substrate and the counter substrate and relaxing the stress applied to an interface between the sealing portion and the electrode substrate or the counter substrate.

CITATION LIST

PATENT DOCUMENT

Patent document 1: International Publication No. 2012/118028

SUMMARY OF THE INVENTION

PROBLEM TO BE SOLVED BY THE INVENTION

However, the photoelectric conversion element described in the above patent document 1 still has room for improvement in terms of durability.

The present invention has been made in view of the above circumstances, an object of the present invention is to provide a photoelectric conversion element having excellent durability.

MEANS FOR SOLVING PROBLEM

In order to solve the above problems, the present invention is a photoelectric conversion element comprising at least one photoelectric conversion cell, wherein the photoelectric conversion cell includes: an electrode substrate; a counter substrate facing the electrode substrate; and a ring-shaped sealing portion bonding the electrode substrate and the counter substrate; and an electrolyte disposed inside the sealing portion, wherein the sealing portion includes: a ring-shaped first resin sealing portion bonded to the electrode substrate and containing a thermoplastic resin; and a ring-shaped second resin sealing portion provided so as to sandwich the counter substrate together with the first resin sealing portion and containing a thermoplastic resin, wherein the second resin sealing portion has a melting point higher than that of the first resin sealing portion, wherein the first resin sealing portion includes: a first main body part bonded to the electrode substrate; and a first protrusion part provided on a side of the first main body part facing the direction opposite to the electrode substrate, wherein the first main body part includes: an insertion part inserted between the electrode substrate and the counter substrate; and a non-insertion part which is not inserted between the electrode substrate and the counter substrate, wherein the first protrusion part is provided on the non-insertion part of the first main body part and the second resin sealing portion includes a second main body part provided on a side of the counter substrate facing the direction opposite to the electrode substrate and the second main body part of the second resin sealing portion is adhered to the first protrusion part.

According to the photoelectric conversion element, when the photoelectric conversion element is placed under a high temperature environment, and a space between the counter substrate, the electrode substrate, and the sealing portion in the photoelectric conversion cell (hereinafter referred to as "cell space") is pressurized, the counter substrate and the electrode substrate try to separate from each other. At this time, the sealing portion includes the first resin sealing portion having a melting point lower than that of the second resin sealing portion and the first resin sealing portion includes the insertion part inserted between the electrode substrate and the counter substrate. For this reason, even if an excessive stress is about to be applied in a direction perpendicular to the interface between the counter substrate and the first resin sealing portion and the interface between the electrode substrate and the first resin sealing portion, the stress is relaxed by the first resin sealing portion. For this reason, application of an excessive stress to the interface between the first resin sealing portion and the counter substrate as well as the interface between the electrode substrate and the first resin sealing portion is sufficiently suppressed and the peeling of the electrode substrate or the counter substrate from the first resin sealing portion is sufficiently suppressed.

In addition, when the photoelectric conversion element is placed under high temperature environment and the cell space is pressurized in the photoelectric conversion cell, a force pushing out the first resin sealing portion of the sealing portion to the outside acts on the first resin sealing portion, and a large shear stress is applied in a direction parallel to the interface between the electrode substrate and the first resin sealing portion. At this time, the second main body part of the second resin sealing portion is provided on a side of the counter substrate facing the direction opposite to the electrode substrate. For this reason, when it is assumed that the first resin sealing portion does not include the first protrusion part on a side of the first main body part facing the direction opposite to the electrode substrate, the shear stress applied to the interface between the counter substrate and the second main body part of the second resin sealing portion is small. As a result, the difference between the shear stress applied to the interface between the electrode substrate and the first resin sealing portion, and the shear stress applied to the interface between the counter substrate and the second main body part of the second resin sealing portion becomes considerably large, and the first resin sealing portion is easily peeled from the counter substrate. In contrast, when the first resin sealing portion has the first protrusion part on a side of the first main body part facing the direction opposite to the electrode substrate as in the present invention, the second main body part of the second resin sealing portion is adhered to the first protrusion part. For this reason, when a force pushing out the first resin sealing portion to the outside is applied and a stress to direct the first protrusion part to the outside is applied to the first protrusion part, the second main body part of the second resin sealing portion is simultaneously pulled outward by the first protrusion part, and a stress to direct the second main body part to the outside is applied. That is, the shear stress applied to the interface between the counter substrate and the second main body part of the second resin sealing portion increases. For this reason, the difference between the shear stress applied to the interface between the electrode substrate and the first resin sealing portion and the shear stress applied to the interface between the counter substrate and the second main body part of the second resin sealing portion can be sufficiently reduced, and the first resin sealing portion is less likely to be peeled from the counter substrate.

On the other hand, when the photoelectric conversion element is placed under a low temperature environment and the cell space is decompressed in the photoelectric conversion cell, a force to pull the first resin sealing portion of the sealing portion into the inside acts on the first resin sealing portion, and a large shear stress is applied in a direction parallel to the interface between the electrode substrate and the first resin sealing portion. At this time, the second main body part of the second resin sealing portion is provided on a side of the counter substrate facing the direction opposite to the electrode substrate. Therefore, when it is assumed that the first resin sealing portion does not include the first protrusion part on a side of the first main body part facing the direction opposite to the electrode substrate, the shear stress applied to the interface between the counter substrate and the second main body part of the second resin sealing portion is small. As a result, the difference between the shear stress applied to the interface between the electrode substrate and the first resin sealing portion, and the shear stress applied to the interface between the counter substrate and the second main body part of the second resin sealing portion becomes considerably large, and the first resin sealing portion is easily peeled from the counter substrate. In contrast, in a case where the first resin sealing portion has the first protrusion part on a side of the first main body part facing the direction opposite to the electrode substrate as in the present invention, the second main body part of the second resin sealing portion is adhered to the first protrusion part. For this reason, when a force to pull the first resin sealing portion into the inside is applied and a stress to direct the first protrusion part toward the inside is applied to the first protrusion part, the second main body part of the second resin sealing portion is simultaneously pushed toward the inside by the first protrusion part, and a stress to direct the second main body part toward the inside is applied to the second main body part. For this reason, the difference between the shear stress applied to the interface between the electrode substrate and the first resin sealing portion and the shear stress applied to the interface between the counter substrate and the second main body part of the second resin sealing portion can be sufficiently reduced, and the first resin sealing portion is less likely to be peeled from the counter substrate.

Thus, according to the photoelectric conversion element of the present invention, the leakage of the electrolyte caused by the peeling of the first resin sealing portion from the electrode substrate or the counter substrate is sufficiently suppressed. Therefore, the photoelectric conversion element of the present invention can have excellent durability.

In the above-mentioned photoelectric conversion element, it is preferable that the photoelectric conversion cell further comprise an oxide semiconductor layer on the electrode substrate or the counter substrate, and a dye supported on the oxide semiconductor layer, and that the oxygen permeability of the second resin sealing portion be smaller than the oxygen permeability of the first resin sealing portion.

In this case, the sealing portion includes the second resin sealing portion having an oxygen permeability smaller than that of the first resin sealing portion in addition to the first resin sealing portion. For this reason, compared to a case where the sealing portion does not include the second resin sealing portion, it is possible to sufficiently suppress the intrusion of oxygen into the electrolyte through the sealing portion, the deterioration due to oxygen of the dye supported on the oxide semiconductor layer is sufficiently suppressed, and the photoelectric conversion element can have more excellent durability.

In the above-mentioned photoelectric conversion element, A represented by the following formula (1) is preferably 1,200 to 60,000.

$$A = A1 \ / \ A2 \qquad (1)$$

(A1 represents the oxygen permeability of the first resin sealing portion and A2 represents the oxygen permeability of the second resin sealing portion)

In this case, compared to a case where the value of A is out of the above range, the intrusion of oxygen into the electrolyte through the sealing portion is more sufficiently suppressed, the deterioration due to oxygen of the dye supported on the oxide semiconductor layer is more sufficiently suppressed, and the photoelectric conversion element can have more excellent durability.

In the above-mentioned photoelectric conversion element, the second resin sealing portion preferably includes a resin containing a vinyl alcohol unit.

In this case, since the oxygen permeability of the second resin sealing portion can be sufficiently reduced, the value of A represented by the above formula (1) can be easily adjusted.

In the above-mentioned photoelectric conversion element, $\Delta T$ represented by the following formula (2) is preferably 25°C or higher.

$$\Delta T = T2 - T1 \qquad (2)$$

(T1 represents a melting point of the first resin sealing portion and T2 represents a melting point of the second resin sealing portion.)

In this case, compared with a case where $\Delta T$ is less than 25°C, the peeling of the electrode substrate or the counter substrate from the first resin sealing portion is more sufficiently suppressed.

In the above-mentioned photoelectric conversion element, it is preferable that the first resin sealing portion further includes a second protrusion part on a side facing the direction opposite to the electrode substrate in the insertion part of the main body part, and that the second resin sealing portion include a second main body part provided on a side of the counter substrate facing the direction opposite to the electrode substrate, and a turning part which is connected to the second main body part and turns between the electrode substrate and the counter substrate, and the turning part be adhered to the second protrusion part.

In this case, the turning part of the second resin sealing portion turns between the electrode substrate and the counter substrate, and the turning part is adhered to the second protrusion part. Therefore, when the photoelectric conversion element is placed under a high temperature environment, and the cell space is pressurized in the photoelectric conversion cell, a force to push out the first resin sealing portion of the sealing portion to the outside is applied. At this time, when a stress to direct the second protrusion part to the outside is applied to the second protrusion part, a stress to direct the turning part adhered to the second protrusion part to the outside is also applied to the turning part. At this time, the stress applied to the turning part is transmitted to the second main body part of the second resin sealing portion, and a stress to direct the second main body part toward the outside is applied to the second main body part. For this reason, the difference between the shear stress applied to the interface between the electrode substrate and the first resin sealing portion and the shear stress applied to the interface between the counter substrate and the second main body part of the second resin sealing portion can be more sufficiently reduced, and the first resin sealing portion is less likely to be peeled from the counter substrate. As a result, the photoelectric conversion element can have more excellent durability.

In the above-mentioned photoelectric conversion element, R represented by the following formula (3) is preferably 3.0 or more.

$$R = (t1 + t2)) \ / \ t1 ...(3)$$

(In the above formula (3), $t_1$ represents a thickness ($\mu$m) of the first main body part and $t_2$ represents a thickness ($\mu$m) of the first protrusion part.)

In this case, compared to a case where R is less than 3.0, the photoelectric conversion element can have more excellent durability.

EFFECT OF THE INVENTION

According to the present invention, a photoelectric conversion element having excellent durability can be provided.

BRIEF DESCRIPTION OF DRAWINGS

FIG. 1 is a cut surface end view illustrating a first embodiment of a photoelectric conversion element of the present invention;
FIG. 2 is a cross-sectional view illustrating the counter substrate of FIG. 1;
FIG. 3 is a partially enlarged view of FIG. 1;
FIG. 4 is a cut surface end view illustrating a part of a second embodiment of the photoelectric conversion element of the present invention;
FIG. 5 is a cut surface end view illustrating a part of a third embodiment of the photoelectric conversion element of the present invention; and
FIG. 6 is a cut surface end view illustrating a fourth embodiment of the photoelectric conversion element of the present invention.

MODE(S) FOR CARRYING OUT THE INVENTION

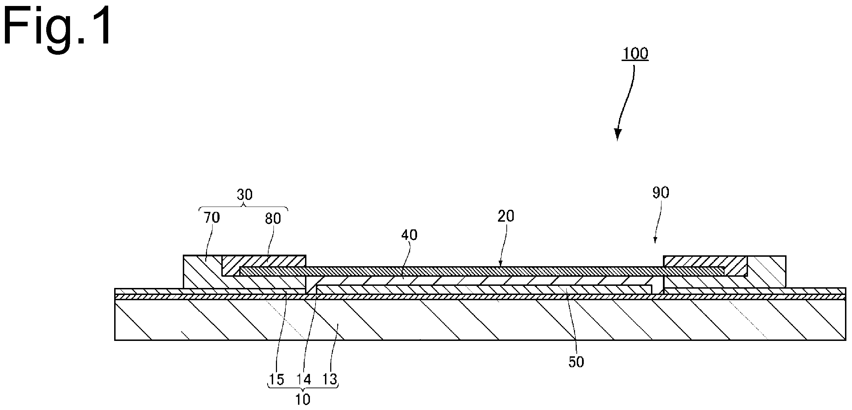

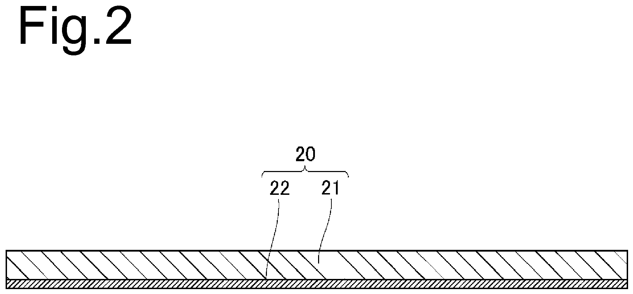

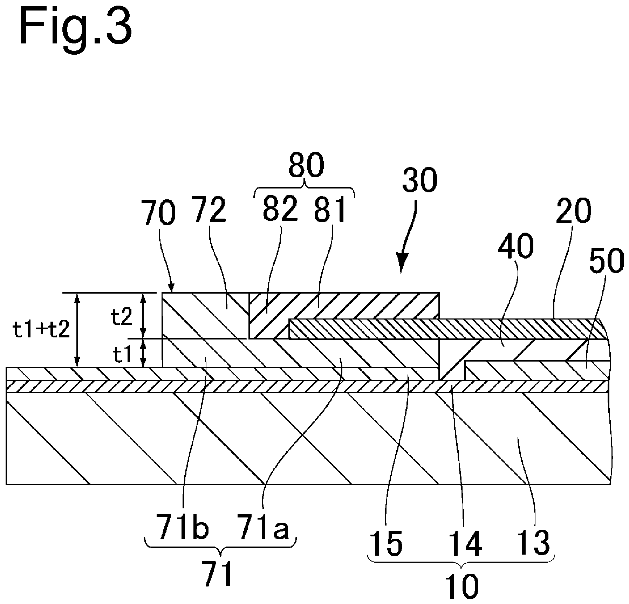

Hereinafter, an embodiment of the photoelectric conversion element of the present invention will be described in detail with reference to FIGS. 1 to 3. FIG. 1 is a cut surface end view illustrating a first embodiment of a photoelectric conversion element of the present invention; FIG.2 is a cross-sectional view illustrating a counter substrate of FIG. 1; and FIG. 3 is a partial enlarged view of FIG. 1.

As illustrated in FIG. 1, a photoelectric conversion element 100 has one photoelectric conversion cell 90. The photoelectric conversion cell 90 includes an electrode substrate 10; a counter substrate 20 facing the electrode substrate 10; a ring-shaped sealing portion bonding the electrode substrate 10 and the counter substrate 20; an electrolyte 40 disposed inside the sealing portion 30; an oxide semiconductor layer 50 provided on a surface of the electrode substrate 10 facing the counter substrate 20; and a dye (not shown) supported on the oxide semiconductor layer 50.

The electrode substrate 10 includes a transparent substrate 13, a transparent conductive layer 14 provided on the transparent substrate 13 and a ring-shaped insulating part 15 on the transparent conductive layer 14 so as to surround the oxide semiconductor layer 50 and adhered to the sealing portion 30.

As illustrated in FIG. 2, the counter substrate 20, which includes a counter electrode, has a conductive substrate 21 which serves as a substrate and an electrode; and a catalyst layer 22 provided on the conductive substrate 21. The catalyst layer 22 is provided on a side of the conductive substrate 21 facing the electrode substrate 10.

The sealing portion 30 includes a ring-shaped first resin sealing portion 70 adhered to the electrode substrate 10; and a ring-shaped second resin sealing portion 80 provided so as to sandwich the counter substrate 20 together with the first resin sealing portion 70. Herein, both the first resin sealing portion 70 and the second resin sealing portion 80 include a thermoplastic resin, and the second resin sealing portion 80 has a melting point higher than that of the first resin sealing portion 70.

As illustrated in FIG.3, the first resin sealing portion 70 includes a first main body part 71 adhered to the electrode substrate 10; and a first protrusion part 72 provided on a side of the first main body part 71 facing the direction opposite to the electrode substrate 10. The first main body part 71 includes an insertion part 71a inserted between the electrode substrate 10 and the counter substrate 20; and a non-insertion part 71b which is not inserted between the electrode substrate 10 and the counter substrate 20. The first main body part 72 is provided on a side of the non-insertion part 71b of the first main body part 71 facing the direction opposite to the electrode substrate 10.

On the other hand, the second resin sealing portion 80 includes a second main body part 81 provided on a side of the counter substrate 20 facing the direction opposite to the electrode substrate 10; and an intermediate part 82 between the second main body part 81 and the first protrusion part 72.

The second main body part 81 of the second resin sealing portion 80 is adhered to the first protrusion part 72 via the intermediate part 82. The intermediate part 82 is adhered to the non-insertion part 71b of the first main body part 71.

According to the photoelectric conversion element 100, when the photoelectric conversion element 100 is placed under a high temperature environment, and in the photoelectric conversion cell 90 a space (cell space) between the counter substrate 20, the electrode substrate 10 and the sealing portion 30 is pressurized, the counter substrate 20 and the electrode substrate 10 try to separate from each other. At this time, the sealing portion 30 includes the first resin sealing portion 70 having a melting point lower than that of the second resin sealing portion 80 and the first resin sealing portion 70 includes the insertion part 71a inserted between the electrode substrate 10 and the counter substrate 20. For this reason, even if an excessive stress is about to be applied in a direction perpendicular to the interface between the counter substrate 20 and the first resin sealing portion 70 as well as the interface between the electrode substrate 10 and the first resin sealing portion 70, the stress is relaxed by the first resin sealing portion 70. Therefore, application of an excessive stress to the interface between the first resin sealing portion 70 and the counter substrate 20, as well as the interface between the electrode substrate 10 and the first resin sealing portion 70 is sufficiently suppressed and peeling of the electrode substrate 10 or the counter substrate 20 from the first resin sealing portion 70 is sufficiently suppressed.

When the photoelectric conversion element 100 is placed under a high temperature environment, and the cell space is pressurized in the photoelectric conversion cell 90, a force to push out the first resin sealing portion 70 of the sealing portion 30 acts on the first resin sealing portion 70 and a large shear stress is applied in a direction parallel to the interface between the electrode substrate 10 and the first sealing portion 70. At this time, the second main body part 81 of the second resin sealing portion 80 is provided on a side of the counter substrate 20 facing the direction opposite to the electrode substrate 10. For this reason, when it is assumed that the first resin sealing portion 70 does not include the first protrusion part 72 on a side of the first main body part 71 facing the direction opposite to the electrode substrate 10, a shear stress applied to the interface between the counter substrate 20 and the second main body part 81 of the second resin sealing portion 80 is small. As a result, the difference between the shear stress applied to the interface between the electrode substrate 10 and the first resin sealing portion 70 and the shear stress applied to the interface between the counter substrate 20 and the second main body part 81 of the second resin sealing portion 80 becomes considerably large, and the first resin sealing portion 70 is easily peeled from the counter substrate 20. In contrast, in a case where the first resin sealing portion 70 includes the first protrusion part 72 on a side of the first main body part 71 facing the direction opposite to the electrode substrate 10 as in the photoelectric conversion element 100, the second main body part 81 of the second resin sealing portion 80 is adhered to the first protrusion part 72 through the intermediate part 82. For this reason, when a force to push out the first resin sealing portion 70 to the outside is applied and a stress to direct the first protrusion part 72 toward the outside is applied to the first protrusion part 72, the second main body part 81 is simultaneously pulled outward through the intermediate part 82 of the second resin sealing portion 80 by the first protrusion part 72, and a stress to direct the second main body part 81 toward the outside is applied to the second main body part 81. That is, a shear stress applied to the interface between the counter substrate 20 and the second main body part 81 of the second resin sealing portion 80 is increased. For this reason, the difference between the shear stress applied to the interface between the electrode substrate 10 and the first resin sealing portion 70 and the shear stress applied to the interface between counter substrate 20 and the second main body part 81 of the second resin sealing portion 80 can be sufficiently reduced and the first resin sealing portion 70 is less likely to be peeled from the counter substrate 20.

On the other hand, when the photoelectric conversion element 100 is placed in a low temperature environment, and the cell space is decompressed in the photoelectric conversion cell 90, a force to pull the first resin sealing portion 70 of the sealing portion 30 into the inside acts on the first resin sealing portion 70 and a large shear stress is applied in a direction parallel to the interface between the electrode substrate 10 and the first resin sealing portion 70. At this time, the second main body part 81 of the second resin sealing portion 80 is provided on a side of the counter substrate 20 facing the direction opposite to the electrode substrate 10. For this reason, when it is assumed that the first resin sealing portion 70 does not include the first protrusion part 72 on a side of the first main body part 71 facing the direction opposite to the electrode substrate 10, a shear stress applied to the interface between the counter substrate 20 and the second main body part 81 of the second resin sealing portion 80 is small. As a result, the difference between the shear stress applied to the interface between the electrode substrate 10 and the first resin sealing portion 70 and a shear stress applied to the interface between the counter substrate 20 and the second main body part 81 of the second resin sealing portion 80 becomes considerably large, and the first resin sealing portion 70 is easily peeled from the counter substrate 20. In contrast, in a case where the first resin sealing portion 70 includes the first protrusion part 72 on a side of the first main body part 71 facing the direction opposite to the electrode substrate 10 as in the photoelectric conversion element 100, the second main body part 81 of the second resin sealing portion 80 is adhered to the first protrusion part 72 through the intermediate part 82. For this reason, when a force to pull the first resin sealing portion 70 inside is applied and a stress to direct the first protrusion part 72 inward is applied to the first protrusion part 72, the second main body part 81 is simultaneously pushed inward through the intermediate part 82 of the second resin sealing portion 80 by the first protrusion part 72 and a stress to direct the second main body part 81 inward is applied. Therefore, the difference between the shear stress applied to the interface between the electrode substrate 10 and the first resin sealing portion 70 and the shear stress applied to the interface between the counter substrate 20 and the second main body part 81 of the second resin sealing portion 80 can be sufficiently reduced and the first resin sealing portion 70 is less likely to be peeled from the counter substrate 20.

Thus, according to the photoelectric conversion element 100, the leakage of the electrolyte 40 caused by the peeling of the first resin sealing portion 70 from the electrode substrate 10 or the counter substrate 20 is sufficiently suppressed. Therefore, the photoelectric conversion element 100 can have excellent durability.

Next, the electrode substrate 10, the counter substrate 20, and the sealing portion 30, the electrolyte 40, the oxide semiconductor layer 50, and the dye will be described in detail.

<<Electrode substrate>>

As described above, the electrode substrate 10 includes the transparent substrate 13; the transparent conductive layer 14 provided on the transparent substrate 13; and the ring-shaped insulating part 15 adhered to the sealing portion 30.

<Transparent substrate>

The material constituting the transparent substrate 13 may be any transparent material, for example, and examples of such a transparent material include glass such as borosilicate glass, soda lime glass, glass which is made of soda lime and whose iron component is less than that of ordinary soda lime glass, and quartz glass; polyethylene terephthalate (PET), polyethylene naphthalate (PEN), polycarbonate (PC), and polyethersulfone (PES). The thickness of the transparent substrate 13 is appropriately determined depending on the size of the photoelectric conversion element 100 and is not particularly limited, but it may be set to the range of from 50 to 40000 $\mu$m, for example.

<Transparent conductive layer>

Examples of the material constituting the transparent conductive layer 14 include a conductive metal oxide such as indium-doped-tin-oxide (ITO), tin oxide ($SnO_2$), and fluorine-doped-tin-oxide (FTO). The transparent conductive layer 14 may be constituted by a single layer or a laminate consisting of a plurality of layers which are constituted by different conductive metal oxides. It is preferable that the transparent conductive layer 14 be constituted by FTO since FTO exhibits high heat resistance and chemical resistance in a case in which the transparent conductive layer 14 is constituted by a single layer. The thickness of the transparent conductive layer 14 may be set to the range of from 0.01 to 2 $\mu$m, for example.

<Insulating part>

The material constituting the insulating part 15 is not particularly limited as long as it is an insulating material, but, examples of the insulating material include, for example, an inorganic insulating material such as glass frit; a thermosetting resin such as a polyimide resin; and a thermoplastic resin. Among them, the inorganic insulating material such as glass frit or a thermosetting resin is preferably used. In this case, even if the sealing portion 30 has fluidity at a high temperature, the insulating part 15 is less likely to be fluidized even at a high temperature compared to the case where the insulating material is composed of a thermoplastic resin. Therefore, contact between the transparent conductive layer 14 of the electrode substrate 10 and the counter substrate 20 is sufficiently suppressed and short circuit between the transparent conductive layer 14 and the counter substrate 20 can be sufficiently suppressed.

Although the thickness of the insulating part 15 is not particularly limited, the thickness is typically 10 to 30$\mu$m, and preferably 15 to 25$\mu$m.

<<Counter substrate>>

As described above, the counter substrate 20 includes the conductive substrate 21 which serves as a substrate and an electrode; and the catalyst layer 22 which is provided on a side of the conductive substrate 21 facing the electrode substrate 10 and promotes the catalyst reaction.

<Conductive substrate>

The conductive substrate 21 is constituted by, for example, a corrosion-resistant metallic material such as titanium, nickel, platinum, molybdenum, tungsten, aluminum and stainless steel. Alternatively, the substrate and the electrode may be divided, and the conductive substrate 21 may be constituted by a stacked body in which a conductive layer made of a conductive oxide such as ITO, FTO or the like is formed as the electrode on the resin film, or may be a stacked body in which a conductive layer made of the conductive oxide such as ITO, FTO or the like is formed on glass. The thickness of the conductive substrate 21 is appropriately determined according to the size of the photoelectric conversion element 100 and is not particularly limited. However, the thickness may be set to 0.01 to 0.1 mm, for example.

<Catalyst layer>

The catalyst layer 22 is made of a metal such as platinum, a carbon-based material, a conductive polymer or the like.

<<Sealing portion>>

The sealing portion 30 includes the first resin sealing portion 70 and the second resin sealing portion 80.
Examples of the thermoplastic resin contained in the first resin sealing portion 70 include a resin such as a modified polyolefin resin including an ionomer, an ethylene-vinyl acetate anhydride copolymer, an ethylene-methacrylic acid copolymer and an ethylene-vinyl alcohol copolymer; a vinyl alcohol polymer and the like.
In the first resin sealing portion 70, the value of R represented by the following formula (3) is not particularly limited, but it is preferably 3.0 or more.

$$R = (t1 + t2)) ╱ t1 \quad (3)$$

(In the above formula (3), t1 represents the thickness of the first main body part 71 and t2 represents the thickness of the first protrusion part 72).
In this case, compared to a case where R is less than 3.0, the photoelectric conversion element 100 can have more excellent durability.
The value of R is more preferably 3.5 or more. However, the value of R is more preferably 21 or less.
The thickness of the first main body part 71 of the first resin sealing portion 70 is not particularly limited, but, typically 10 to 100$\mu$m, and preferably 20 to 50$\mu$m.
The thermoplastic resin contained in the second resin sealing portion 80 may be a resin which can give the second resin sealing portion 80 a melting point higher than that of the first resin sealing portion 70 and the same resin as the thermoplastic resin contained in the first resin sealing portion 70 can be used as the thermoplastic resin contained in the second resin sealing portion 80.
$\Delta$T, which is the difference between the melting point T2 of the second resin sealing portion 80 and the melting point T1 of the first resin sealing portion 70 and is represented by the following formula (2), is not particularly limited as long as it is more than 0°C. However, $\Delta$T is preferably 25°C or more. In this case, compared to a case where $\Delta$T is less than 25°C, the peeling of the electrode substrate 10 or the counter substrate 20 from the first resin sealing portion 70 is more sufficiently suppressed. $\Delta$T is preferably 35°C or more. However, $\Delta$T is preferably 60°C or less.

$$\Delta T = T2-T1 \quad (2)$$

The oxygen permeability of the second resin sealing portion 80 may be the same as or different from the oxygen permeability of the first resin sealing portion 70. However, the oxygen permeability of the second resin sealing portion 80 is preferably smaller than the oxygen permeability of the first resin sealing portion 70. In this case, the sealing portion 30 includes the second resin sealing portion 80 having an oxygen permeability smaller than that of the first resin sealing portion 70 in addition to the first resin sealing portion 70. For this reason, compared to a case where the sealing portion 30 does not include the second resin sealing portion 80, intrusion of oxygen into the electrolyte 40 through the sealing portion 30 is sufficiently suppressed, deterioration due to oxygen of the dye supported on the oxide semiconductor layer 50 is sufficiently suppressed, and the photoelectric conversion element 100 can have more excellent durability.
The value of A which is the ratio of the oxygen permeability A1 of the first resin sealing portion 70 and the oxygen permeability A2 of the second resin sealing portion 80 and is expressed by the following formula (1) is not particularly limited, but is preferably 1,200 to 60,000. In this case, compared to a case where the value of A is out of the above range, intrusion of oxygen into the electrolyte 40 through the sealing portion 30 is sufficiently suppressed, deterioration due to oxygen of the dye supported on the oxide semiconductor layer 50 is more sufficiently suppressed by oxygen, and the photoelectric conversion element 100 can have more excellent durability. The value of A is more preferably 2,400 to 8,000. The oxygen permeability of the second resin sealing portion 80 is not particularly limited, but is typically 0.21 to 2.5 (cc/20 $\mu$m$^2$·24h/atm) and preferably from 0.5 to 2.0 (cc/20 $\mu$m$^2$·24h/atm).

$$A = A1 / A2 \quad (1)$$

In addition, as the second resin sealing portion 80, a resin containing a vinyl alcohol unit is preferable. In this case, since the oxygen permeability of the second resin sealing portion 80 can be sufficiently reduced, the value of A represented by the above formula (1) can be easily adjusted. Examples of the resin containing a vinyl alcohol unit include an ethylene-vinyl alcohol copolymer and a vinyl alcohol polymer.

The thickness of the second main body part 81 is not particularly limited, but, is typically 10 to 100$\mu$m, and preferably 30 to 50$\mu$m.

<<Electrolyte>>

The electrolyte 40 contains a redox pair and an organic solvent. It is possible to use acetonitrile, methoxy acetonitrile, 3-methoxy propionitrile, propionitrile, ethylene carbonate, propylene carbonate, diethyl carbonate, $\gamma$-buty-rolactone, valeronitrile or pivalonitrile as the organic solvent. Examples of the redox pair include a redox couple such as a zinc complex, an iron complex, and a cobalt complex in addition to a redox pair containing a halogen atom such as iodide ion/polyiodide ion (for example, $I^-/I_3^-$), bromine ion/polybromide ion or the like. In addition, iodine ion/polyiodide ion can be formed by iodine ($I_2$) and a salt (an ionic liquid or a solid salt) containing iodide ($I^-$) as an anion. In a case of using the ionic liquid having iodide as an anion, only iodide may be added. In a case of using an organic solvent or an ionic liquid other than iodide as an anion, a salt containing iodide ($I^-$) as an anion such as LiI, tetrabutylammonium iodide or the like may be added. In addition, the electrolyte 40 may use an ionic liquid instead of the organic solvent. As the ionic liquid, for example, a known iodide salt such as a pyridinium salt, an imidazolium salt, or a triazolium salt is used. As such an iodide salt, for example, 1-hexyl-3-methylimidazolium iodide, 1-ethyl-3-propylimidazolium iodide, 1-ethyl-3-methylimidazolium iodide, 1,2-dimethyl-3-propylimidazolium iodide, 1-butyl-3-methylimidazolium iodide, or 1-methyl-3-propylimidazolium iodide is preferably used.

In addition, the electrolyte 40 may use a mixture of the ionic liquid and the organic solvent instead of the organic solvent.

In addition, it is possible to add an additive to the electrolyte 40. Examples of the additive include benzimidazole such as 1-methylbenzimidazole (NMB) or 1-butylbenzimidazole (NBB), 4-t-butylpyridine and guanidium thiocyanate. Among them, benzimidazole is preferable as the additive.

Moreover, as the electrolyte 40, a nanocomposite gel electrolyte which is a quasi-solid electrolyte obtained by kneading nanoparticles such as $SiO_2$, $TiO_2$, and carbon nanotubes with the electrolyte to form a gel-like form may be used, or an electrolyte gelled using an organic gelling agent such as polyvinylidene fluoride, a polyethylene oxide derivative or an amino acid derivative may also be used.

<<Oxide semiconductor layer>>

The oxide semiconductor layer 50 is composed of oxide semiconductor particles. The oxide semiconductor particles are composed of, for example, titanium oxide ($TiO_2$), zinc oxide (ZnO), tungsten oxide ($WO_3$), niobium oxide ($Nb_2O_5$), strontium titanate ($SrTiO_3$), tin oxide ($SnO_2$), indium oxide ($In_3O_3$), zirconium oxide ($ZrO_2$), thallium oxide ($Ta_2O_5$), lanthanum oxide ($La_2O_3$), yttrium oxide ($Y_2O_3$), holmium oxide ($Ho_2O_3$), bismuth oxide ($Bi_2O_3$), cerium oxide ($CeO_2$), aluminum oxide ($Al_2O_3$), or two or more kinds of these. The thickness of the oxide semiconductor layer 50 may be set to from 0.1 to 100 $\mu$m, for example.

The oxide semiconductor layer 50 is typically composed of an absorbing layer for absorbing light but may be composed of the absorbing layer and a reflective layer which returns the light transmitted through the absorbing layer to the absorbing layer by reflecting the light.

<<Dye>>

As the dye, for example, a photosensitizing dye such as a ruthenium complex having a ligand including a bipyridine structure, a terpyridine structure, an organic dye such as porphyrin, eosin, rhodanine or merocyanine; and an organic-inorganic composite dye such as a halogenated lead-based perovskite crystal may be exemplified. As the halogenated lead-based perovskite, for example, $CH_3NH_3PbX_3$ (X = Cl, Br, I) is used. Among the above-mentioned dyes, the ruthenium complex having a ligand including a bipyridine structure or a terpyridine structure is preferred. In this case, it is possible to more improve the photoelectric conversion characteristic of the photoelectric conversion element 100. In addition, in a case where a photosensitizing dye is used as the dye, the photoelectric conversion element 100 is a dye-sensitized photoelectric conversion element.

Next, a method of manufacturing the photoelectric conversion element 100 will be described.

First, a conductive substrate obtained by forming the transparent conductive layer 14 on one transparent substrate 13 is prepared.

As a method of forming the transparent conductive layer 14, a sputtering method, a vapor deposition method, a spray pyrolysis method (SPD) or a chemical vapor deposition (CVD) method can be used.

Further, a precursor of the oxide semiconductor layer 50 is formed on the transparent conductive layer 14.

The precursor of the oxide semiconductor layer 50 can be formed by printing a paste for oxide semiconductor layer formation containing oxide semiconductor particles and then drying the paste.

The paste for oxide semiconductor layer formation includes a resin such as polyethylene glycol, and a solvent such as terpineol in addition to the oxide semiconductor particles.

As a method of printing the paste for oxide semiconductor layer formation, for example, a screen printing method, a doctor blade method, a bar coating method or the like can be used.

Then, the precursor of the oxide semiconductor layer 50 is fired to form the oxide semiconductor layer 50.

The firing temperature varies depending on the kind of the oxide semiconductor particles, but is typically 350 to 600°C, and the firing time also varies depending on the kind of the oxide semiconductor particles, but is typically 1 to 5 hours.

Next, a precursor of the insulating part 15 is formed so as to surround the precursor of the oxide semiconductor layer 50.

The precursor of the insulating part 15 can be formed, for example, by applying and drying a paste containing glass frit and drying the paste.

Then, the precursor of the insulating part 15 is fired to form the insulating part 15.

Thus, the electrode substrate 10 on which the oxide semiconductor layer 50 and the insulating part 15 are formed is obtained.

Next, a ring-shaped first sealing portion forming body for forming the first resin sealing portion 70 is prepared. The first sealing resin sealing portion forming body can be obtained by preparing a first sealing resin film and forming one opening in the first sealing resin film, for example.

Then, the first sealing portion forming body is disposed along the insulating part 15 on the insulating part 15 so as to be adhered to the insulating part 15. At this time, adhesion of the first sealing portion forming body to the insulating part 15 can be performed by heating and melting the first sealing portion forming body, for example.

Next, the dye is supported on the oxide semiconductor layer 50 of the electrode substrate 10. To perform this, the dye may be adsorbed on the oxide semiconductor layer 50 by immersing the electrode substrate 10 in a solution containing the dye, then washing out the extra dye with the solvent component of the above solution after making the dye adsorb on the oxide semiconductor layer 50 and performing drying. However, it is also possible to support the dye on the oxide semiconductor layer 50 by coating a solution containing the dye on the oxide semiconductor layer 50 and then drying to adsorb the dye on the oxide semiconductor layer 50.

Next, the electrolyte 40 is prepared. Then, the electrolyte 40 is disposed inside the ring-shaped sealing portion forming body fixed on the electrode substrate 10. Thus, a structure A is obtained.

Next, the counter substrate 20 is prepared.

As described above, the counter substrate 20 can be obtained by forming the conductive catalyst layer 22 on the conductive substrate 21.

Next, another first sealing portion forming body described above is prepared.

On the other hand, a second resin sealing portion forming body having a melting point higher than that of the above-described first sealing portion forming body is prepared. The second resin sealing portion forming body can be obtained by preparing a second sealing resin film and forming one opening in the second sealing resin film, for example.

The, the counter substrate 20 is arranged so as to block the opening of the first sealing portion forming body and then the first sealing portion forming body and the second sealing portion forming body are superimposed so as to sandwich the peripheral edge part of the counter substrate 20 by the first sealing portion forming body and the second sealing portion forming body. Then, the first sealing portion forming body and the second sealing portion forming body are adhered to the counter substrate 20. In addition, adhesion of the first sealing portion forming body and the second sealing portion forming body to the counter substrate 20 can be performed by heating and melting the first sealing portion forming body and the second sealing portion forming body, for example. Thus, a structure B is obtained.

Next, the structure A and the structure B are superimposed, the first sealing portion forming body of the structure A as well as the first sealing portion forming body and the second sealing portion forming body of the structure B are heated and melted while being pressurized. Then, the softening of the first sealing portion forming body starts, the outer peripheral edge part of the first sealing portion forming body facing each other rises up in a direction away from the electrode substrate 10 while spreading outside and are adhered to the second sealing portion forming body. Thus, the sealing portion 30 is formed.

Thus, the photoelectric conversion element 100 is obtained.

The present invention is not limited to the above embodiment. For example, in the above embodiment, the photoelectric conversion element 100 includes one photoelectric conversion cell, but the photoelectric conversion element 100 may include a plurality of photoelectric conversion cells 90.

In addition, in the above embodiment, the photoelectric conversion cell 90 includes the insulating part 15 between the sealing portion 30 and the electrode substrate 10, but the insulating part 15 is not necessarily required, and can be omitted.

Furthermore, in the above embodiment, the second resin sealing portion 80 includes the second main body part 81 and the intermediate part 82, but the second resin sealing portion 80 may be composed of only the second main body part 81. That is, the second resin sealing portion 80 may not include the intermediate part 82. In this case, the second main body part 81 is directly adhered to the first protrusion part 72.

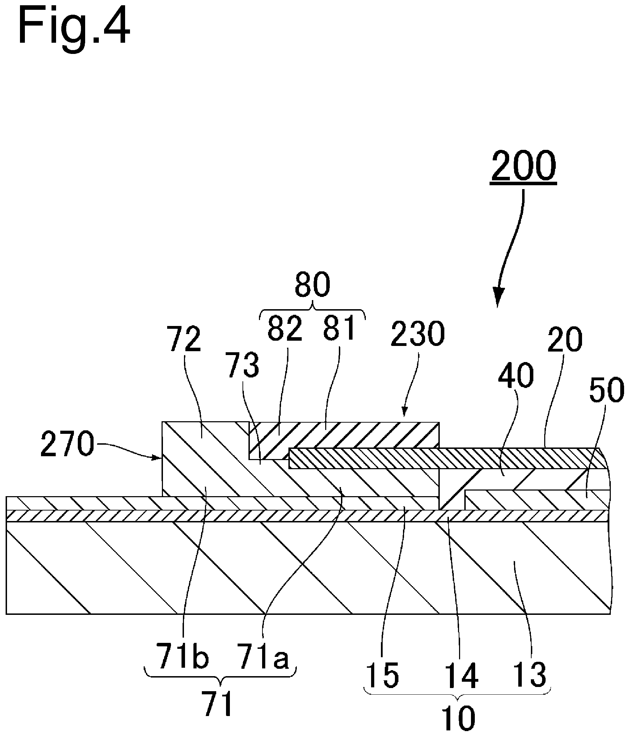

Further, in the above embodiment, the intermediate part 82 of the second resin sealing portion 80 is provided directly on the non-insertion part 71b of the first main body part 71 of the first resin sealing portion 70, but as in a sealing portion 230 of a photoelectric conversion element 200 illustrated in FIG.4, a first resin sealing portion 270 may have a second protrusion part 73 having a thickness smaller than that of the first protrusion part 72 on the non-insertion part 71b of the first main body part 71 and may have an intermediate part 82 on the second protrusion part 73. In this case, the intermediate part 82 is adhered indirectly to the non-insertion part 71b of the first main body part 71 via the second protrusion part 73.

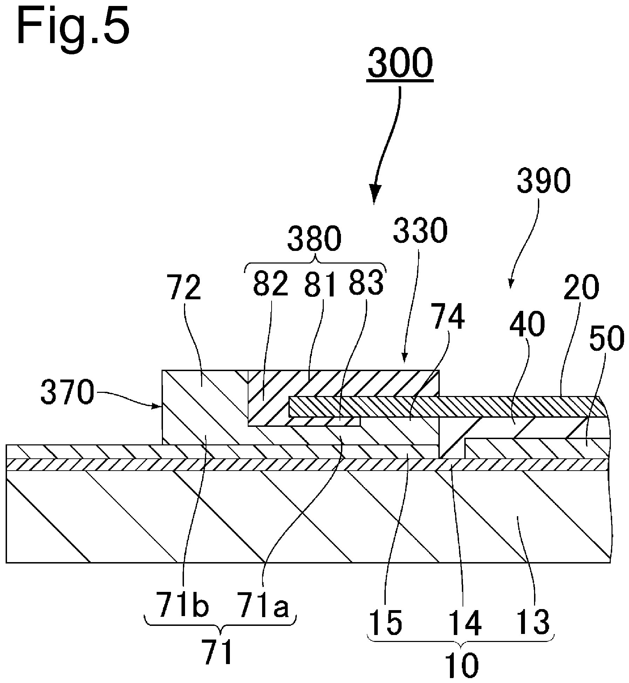

Further, in the above embodiment, the second resin sealing portion 80 includes the second main body part 81 and the intermediate part 82, and the first resin sealing portion 70 includes the first main body part 71 and the first protrusion part 72, but as in a sealing portion 330 of a photoelectric conversion element 300 illustrated in FIG.5, a second resin sealing portion 380 may further include a turning part 83 which is connected to the intermediate part 82 and turns between the electrode substrate 10 and the counter substrate 20 in addition to the second main body part 81 and the intermediate part 82, and a first resin sealing portion 370 may further include a third protrusion part 74 on a side facing the direction opposite to the electrode substrate 10 in the insertion part 71a of the first main body part 71. Herein, the turning part 83 is preferably adhered to the third protrusion part 74.

In this case, the turning part 83 of the second resin sealing portion 380 turns between the electrode substrate 10 and the counter substrate 20, and this turning part 83 is adhered to the third protrusion part 74. For this reason, when the photoelectric conversion element 300 is placed under a high temperature environment and the cell space is pressurized in a photoelectric conversion cell 390, a force to push out the first resin sealing portion 370 of the sealing portion 30 to the outside is applied. At this time, when a stress to direct the third protrusion part 74 to the outside is applied to the third protrusion part 74, a stress to direct the turning part 83 adhered to the third protrusion part 74 to the outside is also applied to the turning part 83. At this time, the stress applied to the turning part 83 is transmitted to the second main body part 81 of the second resin sealing portion 380, and a stress to direct the second main body part 81 to the outside is applied to the second main body part 81. For this reason, the difference between a shear stress applied to the interface between the electrode substrate 10 and the first resin sealing portion 370 and a shear stress applied to the interface between the counter substrate 20 and the second main body part 81 of the second resin sealing portion 380 can be sufficiently reduced, and the first resin sealing portion 370 is less likely to be peeled from the counter substrate 20. As a result, the photoelectric conversion element 300 can have more excellent durability.

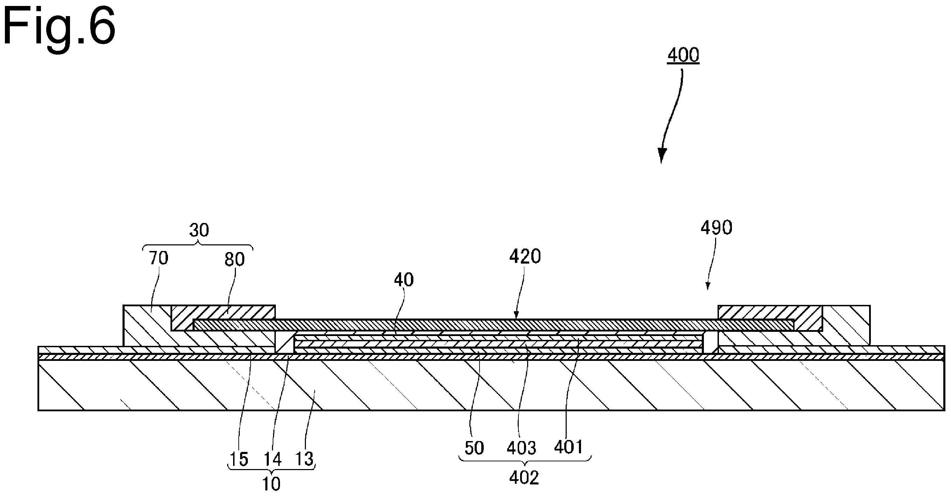

Furthermore, in the above embodiment, the conductive substrate 21 and the catalyst layer 22 constitutes the counter substrate 20, but as in a photoelectric conversion cell 490 of a photoelectric conversion element 400 illustrated in FIG. 6, as the counter substrate, an insulating substrate 420 may be used instead of the counter substrate 20. In this case, a structure 402 is disposed in a space between the insulating substrate 420, the sealing portion 30 and the electrode substrate 10. The structure 402 is provided on a surface of the electrode substrate 10 facing the insulating substrate 420. The structure 402 includes, in order from the electrode substrate 10 side, the oxide semiconductor layer 50, a porous insulating layer 403 and a counter electrode 401. Further, in the space, the electrolyte 40 is arranged. The electrolyte 40 is impregnated into the oxide semiconductor layer 50 and the porous insulating layer 403. Herein, as the insulating substrate 420, for example, a glass substrate or a resin film can be used. As the counter electrode 401, an electrode which is the same as the counter substrate 20 can be used. Alternatively, the counter electrode 401 may be composed of a porous single layer containing, for example, carbon. The porous insulating layer 403 is mainly used for preventing physical contact between the oxide semiconductor layer 50 and the insulating substrate 420 and impregnating the electrolyte 40 into the inside. As such the porous insulating layer 403, for example, a fired body of an oxide can be used. In addition, in the photoelectric conversion element 400 illustrated in FIG. 6, only one structure 402 is provided in the space between the sealing portion 30, the electrode substrate 10 and the insulating substrate 420, but a plurality of the structures 402 may be provided. In addition, the porous insulating layer 403 is provided between the oxide semiconductor layer 50 and the counter electrode 401, but the porous insulating layer may be provided between the electrode substrate 10 and the counter electrode 401 so as to surround the oxide semiconductor layer 50. With this structure as well, it is possible to prevent physical contact between the oxide semiconductor layer 50 and the counter electrode 401.

Examples

Hereinafter, the content of the present invention will be described more specifically with reference to examples, but the present invention is not limited to the following examples.

(Example 1)

First, a conductive substrate was obtained by forming a transparent conductive layer made of FTO and having a thickness of $0.7\mu m$ on a transparent substrate having a thickness of 2.2mm and composed of glass (trade name: TECa7, manufactured by Pilkington Group Limited) by a sputtering method.

Next, a precursor of an oxide semiconductor layer was formed on the transparent conductive layer. Specifically, the precursor of the oxide semiconductor layer was formed by printing a titanium oxide paste (trade name "PST-21NR", manufactured by JGC Catalysts and Chemicals Ltd., the average particle diameter: 21 nm) with a thickness of $10\mu m$ by screen printing first, and drying the paste.

Next, the precursor of the oxide semiconductor layer was fired at 500°C for 30 minutes, and an oxide semiconductor layer was formed on the transparent conductive layer.

Next, a glass insulating part was formed by printing a paste of low melting point glass frit (trade name: "PLFOC-837B", manufactured by Okuno Chemical Industries Co., Ltd.) such that the thickness after firing is $20\mu m$ and the paste surround the oxide semiconductor layer, and then firing the paste at 500°C for 30 minutes. Thus, an electrode substrate on which the oxide semiconductor layer and the glass insulating part were formed was obtained.

Next, a resin film made of low density polyethylene (product name "BYNEL 4164", manufactured by DuPont, melting point: 127°C, oxygen permeability: $12,000(cc/20\mu m^2 \cdot 24h/atm)$) was prepared, and a ring-shaped first sealing portion forming body was prepared by forming an opening in the resin film.

Then, the first sealing portion forming body was mounted on the glass insulating part, and then the first sealing portion forming body was welded to the glass insulating part by heat press.

Next, a dye was adsorbed on the oxide semiconductor layer by immersing the electrode substrate on which the first sealing portion forming body was formed in a dye solution for 16 hours. At this time, a Z907 dye solution of 0.2 mM was used as the dye solution.

Next, an electrolyte was disposed inside the first sealing portion forming body. As the electrolyte, an electrolyte obtained by dissolving iodine in a solvent comprising 3-methoxypropionitrile to have a concentration of 10mM. Thus, the structure A was obtained.

Next, a counter substrate was prepared by forming a catalyst layer made of platinum and having a thickness of 10 nm on a titanium foil having a thickness of $40\mu m$ by a sputtering method. At this time, in both surfaces of the titanium foil, masking was applied to a peripheral edge part to weld a sealing portion forming body such that catalyst was not formed.

Next, another ring-shaped first sealing portion forming body described above was prepared. On the other hand, a second sealing portion forming body for forming the second resin sealing portion was prepared. The ring-shaped second sealing portion forming body was prepared by preparing a resin film made of an ethylene vinyl alcohol copolymer (product name "EVELEF-E", manufactured by KURARAY CO., LTD., melting point: 165° C, oxygen permeability: 1.5 $(cc/20\mu m^2 \cdot 24h)/atm)$) and forming one opening in this resin film.

Then, after the counter substrate was arranged so as to block the opening of the first sealing portion forming body, the first sealing portion forming body and the second sealing portion forming body were superimposed so as to sandwich a peripheral part of the counter substrate by the first sealing portion forming body and the second sealing portion forming body. Then, the first sealing portion forming body and the second sealing portion forming body were adhered to the counter substrate by using a vacuum heat laminating method. Thus, a structure B was obtained.

Then, the structure A and the structure B were superimposed in a vacuum chamber having a degree of vacuum of 600 Pa, and the first sealing portion forming body of the structure A as well as the first sealing portion forming body and the second sealing portion forming body of the structure B were heated and melted while being pressurized by using a stepped hot mold obtained by providing a ring-shaped projection part on a main body part with the surface temperature of the projection part set to 200°C. At this time, the pressing was performed with press thrust set to about 1kN. As a result, softening of the first sealing portion forming body started, the outer peripheral edge part of the first sealing portion forming body facing each other rose up in a direction away from the electrode substrate while spreading outside, and were adhered to the second sealing portion forming body. In this way, a sealing portion having a shape as illustrated in FIG.3 was formed. At this time, the thickness t1 of the first main body part of the first resin sealing portion was $40\mu m$, the thickness t2 of the first protrusion part was $80\mu m$, and R represented by the above-mentioned formula (3) was 3.0.

Thus, a photoelectric conversion element composed of one photoelectric conversion cell was obtained.

(Comparative Example 1)

A photoelectric conversion element was manufactured in the same manner as Example 1 except that a low-density polyethylene identical to that of the first sealing portion forming body was used in place of the ethylene vinyl alcohol copolymer.

(Comparative Example 2)

A photoelectric conversion element was manufactured in the same manner as Example 1 except that at the time of heating and melting the first sealing portion forming body of the structure A, as well as the first sealing portion forming body and the second sealing portion forming body of the structure B while pressurizing them, a sealing portion in which the first resin sealing portion did not include the first protrusion part in FIG.3 (that is, a sealing portion in which the value of R represented by the above-mentioned formula (3) was 1) was formed by changing the surface temperature of the projection part of the stepped hot mold from 200°C to 180°C and changing the press thrust from about 1kN to about 0.5kN.

<Evaluation of durability>

For the photoelectric conversion elements of Example 1, Comparative Example 1 and Comparative Example 2 obtained as described above, heat cycle test was performed, and measurements of the IV curves was performed under an illuminance of 200 lux with a white LED used as a light source before and after the heat cycle test. The output retention rates were calculated on the basis of the output obtained from the IV curves and the following formula. The results are illustrated in Table 1.

```
Output retention rate (%) = output after heat cycle test／

output before heat cycle test
```

In addition, 200 times of heat cycle tests were performed according to JIS C8917, with a heat cycle of lowering temperature to -40°C and then raising temperature to 90°C as one cycle.

[Table 1]

| | Presence or Absence of Second Resin Sealing Portion | Presence or Absence of First Protrusion Part in First Resin Sealing Portion | Thickness t1 of First Main Body Part ($\mu$m) | Thickness t2 of First Protrusion Part ($\mu$m) | R(= (t1+t2) /t1) | Durability |
| --- | --- | --- | --- | --- | --- | --- |
| | | | | | | Output Retention Rate (%) |
| Example 1 | Present | Present | 40 | 80 | 3 | 95.2 |
| Comparative Example 1 | Absent | - | - | - | - | 92.4 |
| Comparative Example 2 | Present | Absent | 40 | 0 | 1 | 89.1 |

From the results illustrated in Table 1, it was found that the output retention rate of the photoelectric conversion element of Example 1 was greater than the output retention rates of Comparative Examples 1 and 2.
From this, it was confirmed that the photoelectric conversion element of the present invention can have excellent durability.

EXPLANATIONS OF LETTERS OR NUMERALS

10    Electrode substrate

20            Counter substrate

| 30 | Sealing portion |
|---|---|
| 40 | Electrolyte |
| 50 | Oxide semiconductor layer |
| 70 | First resin sealing portion |
| 71 | First main body part |
| 71a | Insertion part |
| 71b | Non-insertion part |
| 72 | First protrusion part |
| 73 | Second protrusion part |
| 80 | Second resin sealing portion |
| 81 | Second main body part |
| 83 | Turning part |
| 90, 390, 490 | Photoelectric conversion cell |
| 100,200,300, 400 | Photoelectric conversion element |
| 420 | Insulating substrate (counter substrate) |

**Claims**

1.  A photoelectric conversion element comprising at least one photoelectric conversion cell, wherein the photoelectric conversion cell comprises
    an electrode substrate;
    a counter substrate facing the electrode substrate;
    a ring-shaped sealing portion bonding the electrode substrate and the counter substrate; and
    an electrolyte disposed inside the sealing portion,
    wherein the sealing portion includes:

    a ring-shaped first resin sealing portion adhered to the electrode substrate and containing a thermoplastic resin; and
    a ring-shaped second resin sealing portion provided so as to sandwich the counter substrate together with the first resin sealing portion and containing a thermoplastic resin,
    wherein the second resin sealing portion has a melting point higher than that of the first resin sealing portion,
    wherein the first resin sealing portion includes:

    a first main body part adhered to the electrode substrate; and
    a first protrusion part provided on a side of the first main body part facing the direction opposite to the electrode substrate,
    wherein the first main body part includes:

    an insertion part inserted between the electrode substrate and the counter substrate; and
    a non-insertion part which is not inserted between the electrode substrate and the counter substrate,
    wherein the first protrusion part is provided in the non-insertion part of the first main body part,
    the second resin sealing portion comprises a second main body part provided on a side of the counter substrate facing the direction opposite to the electrode substrate, and
    the second main body part of the second resin sealing portion is adhered to the first protrusion part.

2.  The photoelectric conversion element according to claim 1, wherein the photoelectric conversion element further comprises an oxide semiconductor layer on the electrode substrate or the counter substrate; and a dye supported on the oxide semiconductor layer,
    wherein the oxygen permeability of the second resin sealing portion is smaller than the oxygen permeability of the first resin sealing portion.

3.  The photoelectric conversion element according to claim 2, wherein A represented by the following formula (1) is 1,200 to 60,000.

$$A = A1 / A2 \quad (1)$$

(A1 represents the oxygen permeability of the first resin sealing portion and A2 represents the oxygen permeability of the second resin sealing portion.)

4. The photoelectric conversion element according to claim 2 or 3, wherein the second resin sealing portion includes a resin containing a vinyl alcohol unit.

5. The photoelectric conversion element according to any one of claims 1 to 4, wherein $\Delta T$ represented by the following formula (2) is 25°C or more.

$$\Delta T \ = \ T2 - T1 \qquad (2)$$

(T1 represents a melting point of the first resin sealing portion and T2 represents a melting point of the second resin sealing portion)

6. The photoelectric conversion element according to any one of claims 1 to 5, wherein the first resin sealing portion further comprises a second protrusion part on a side facing the direction opposite to the electrode substrate in the insertion part of the first main body part,
the second resin sealing portion further comprises a turning part which is connected to the second main body part and turns between the electrode substrate and the counter substrate, and
the turning part is adhered to the second protrusion part.

7. The photoelectric conversion element according to any one of claims 1 to 6, wherein R represented by the following formula (3) is 3.0 or more.

$$R \ = \ (t1 \ + \ t2)) \ / \ t1 \qquad (3)$$

(In the formula (3), t1 represents a thickness of the first main body part and t2 represents a thickness of the first protrusion part from the first main body part)

Fig.1

100

90

50

20

40

30

80

70

13

14

10

15

# Fig.2

# Fig.3

# Fig.4

# Fig.5

EP 3 506 327 A1

# Fig.6

## INTERNATIONAL SEARCH REPORT

| International application No. |
| --- |
| PCT/JP2017/030212 |

**A. CLASSIFICATION OF SUBJECT MATTER**
*H01G9/20*(2006.01)i

According to International Patent Classification (IPC) or to both national classification and IPC

**B. FIELDS SEARCHED**

Minimum documentation searched (classification system followed by classification symbols)
H01G9/20

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-199787 A (Fujikura Ltd.), 23 October 2014 (23.10.2014), (Family: none) | 1-7 |
| A | JP 2002-158146 A (NEC Corp.), 31 May 2002 (31.05.2002), & US 2002/0051335 A1 | 1-7 |
| A | JP 2011-222139 A (Fujikura Ltd.), 04 November 2011 (04.11.2011), & US 2013/0026463 A1    & WO 2011/125843 A1 & EP 2555315 A1 | 1-7 |

☐ Further documents are listed in the continuation of Box C.    ☐ See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 03 October 2017 (03.10.17) | 10 October 2017 (10.10.17) |

| Name and mailing address of the ISA/<br>Japan Patent Office<br>3-4-3,Kasumigaseki,Chiyoda-ku,<br>Tokyo 100-8915,Japan | Authorized officer |
| | Telephone No. |

Form PCT/ISA/210 (second sheet) (January 2015)

**EP 3 506 327 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012118028 A